# EUROPEAN PATENT APPLICATION

(11) **EP 3 240 098 A1**
(43) Date of publication of application: **01.11.2017**
(21) Application number: 15872689.3
(22) Date of filing: 07.12.2015
(51) Int. Cl.: H01M 10/48, H01M 2/10, H01M 10/42

(54) **ELECTRICITY STORAGE PACK**

(30) Priority: 22.12.2014 JP 2014258835
(71) Applicant: Autonetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: KUBOKI Hideyuki, Yokkaichi-shi Mie 510-8503 (JP); HIRAI Hiroki, Yokkaichi-shi Mie 510-8503 (JP); HIGASHIKOZONO Makoto, Yokkaichi-shi Mie 510-8503 (JP); NAKAGAWA Kenji, Yokkaichi-shi Mie 510-8503 (JP)
(74) Representative: Takeuchi, Maya
(86) International application number: PCT/JP2015/084268
(87) International publication number: WO 2016/104120

(57) **Abstract**

A small electricity storage pack is provided. An electricity storage pack (10) includes an electricity storage module (13) having a plurality of power storage elements (27), a first voltage signal wire (21) through which signals regarding voltages of the power storage elements (27) in the electricity storage module (13) are transmitted, and a base member (11) on which the electricity storage module (13) is placed and that has a holding portion (20) for holding the first voltage signal wire (21), in which the first voltage signal wire (21) is routed in a space (49) located between the electricity storage module (13) and the base member (11).

## Description

### Technical Field

The present invention relates to an electricity storage pack.

### Background Art

Conventionally known is a power source apparatus provided with a battery assembly having a plurality of batteries (for example, see Patent Document 1). The battery assembly is connected to an electric connection box. A plurality of electronic components are arranged in the electric connection box. Although not shown in detail, a wire harness connects the battery assembly to the plurality of electronic components, or connects the plurality of electronic components to each other.

### Citation List

### Patent Documents

Patent Document 1: JP 2009-4323A

### Summary of Invention

### Technical Problem

However, according to the above-described technology, the wire harness connects the battery assembly to the plurality of electronic components or connects the plurality of electronic components to each other, resulting in complicated wiring, and there is a concern that the size of the overall power source apparatus will increase.

### Solution to Problem

The present invention provides an electricity storage pack including an electricity storage module, a signal wire through which a signal regarding a state of the electricity storage module is transmitted, and a base member on which the electricity storage module is placed and that has a holding portion for holding the signal wire, in which the signal wire is routed in a space located between the electricity storage module and the base member.

According to the present invention, because a detection signal wire can be routed by effectively utilizing the space located between the electricity storage module and the base member, the size of the electricity storage pack can be reduced.

An embodiment of the present invention preferably has the following aspects.

It is preferable that the signal wire includes a single-core wire, the base member has a solderless terminal holding portion for holding a solderless terminal, one end of the solderless terminal has a press-contact blade and another end of the solderless terminal has a male tab, and the press-contact blade contacts the signal wire, and the male tab is introduced into a signal wire connector.

With the above-described aspect, the signal wire and the solderless terminal can be electrically connected with each other with a simple method of contacting the signal wire with the solderless terminal. Since the male tab of this solderless terminal is introduced into the signal wire connector, the signal wire and the other electronic device can be easily electrically connected to each other by fitting a counterpart connector to the signal wire connector.

It is preferable that a detection wire for detecting the state of the electricity storage module is drawn from the electricity storage module, an end of the detection wire is connected to a detection wire connector, and the detection wire and the signal wire are electrically connected to each other by the detection wire connector and the signal wire connector being fitted to each other.

According to the above-described aspect, the detection wire and the signal wire can be constituted by different electric wires. For example, a known method such as crimping can be used when the detection wire is connected to an electrode of the electricity storage module, and thus the detection wire preferably includes a twisted wire. On the other hand, the signal wire and the solderless terminal can be connected to each other by contacting them by pressure when the signal wire is routed on an upper side of the base member, and thus the signal wire preferably includes a single-core wire. According to this aspect, a wire including a twisted wire can be used as the detection wire, and a wire including a single-core wire can be used as the signal wire.

It is preferable that the electricity storage module includes a plurality of power storage elements each having a cathode and an anode, and the detection wire is a voltage detection wire that is electrically connected to at least one of the cathode and the anode.

According to the above-described aspect, the voltages of the power storage elements in the electricity storage module can be detected.

It is preferable that an electronic control unit is placed on the base member, and the signal wire is routed in a space located between the base member and the electronic control unit and is connected to the electronic control unit.

According to the above-described aspect, the electronic control unit is placed on the base member, the signal wire is routed in the space located between the base member and the electronic control unit and is connected to the electronic control unit. This makes it possible to increase space efficiency when the signal wire and the electronic control unit are connected to each other.

### Advantageous Effects of Invention

According to the present invention, the size of the electricity storage pack can be reduced.

### Brief Description of Drawings

FIG. 1 shows a side view of an electricity storage pack according to Embodiment 1.
FIG. 2 shows a plan view of the electricity storage pack from which its cover is removed.
FIG. 3 shows a perspective view of the electricity storage pack from which its cover is removed.
FIG. 4 shows a side view of an electricity storage module.
FIG. 5 shows a side view of the electricity storage module.
FIG. 6 shows a plan view showing a state in which various signal wires are routed and various bus bars are disposed in a base member, and an electric current detection member and a fuse are attached thereto.
FIG. 7 shows an enlarged diagram of a portion showing a structure in which a first voltage signal wire and a solderless terminal are connected.
FIG. 8 shows a plan view showing a state in which various signal wire connectors are attached to the base member, from the state shown in FIG. 6.
FIG. 9 shows a perspective view of the state shown in FIG. 8.
FIG. 10 shows a plan view of a state in which a relay unit and an electronic control unit are attached to the base member, from the state shown in FIG. 8.
FIG. 11 shows a perspective view of a state shown in FIG. 10.

### Description of Embodiments

### Embodiment 1

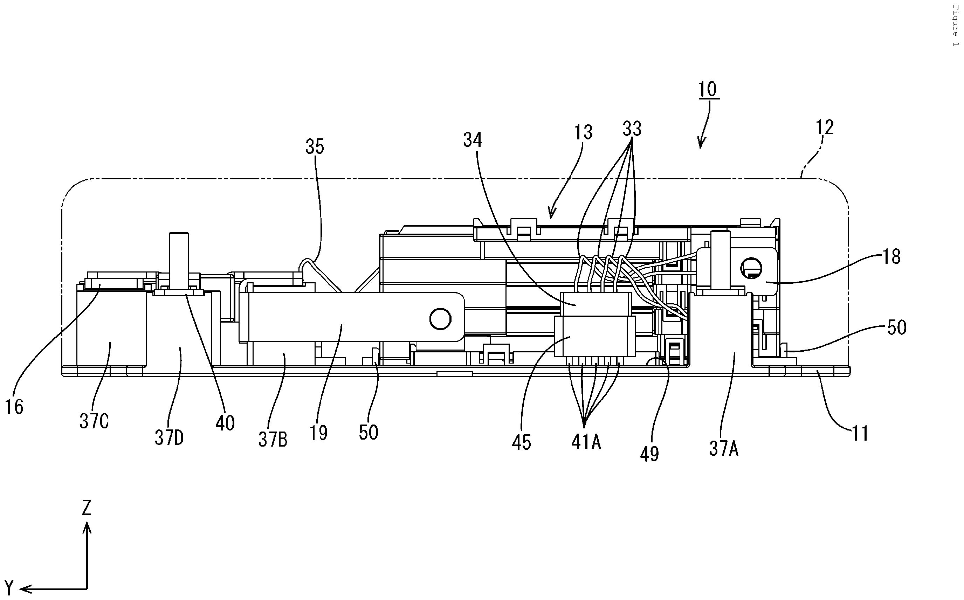

Embodiment 1 of the present invention will be described with reference to FIGS. 1 to 11. An electricity storage pack 10 according to the present embodiment is provided in a vehicle such as an electric car, a hybrid car, or an automobile (not shown). In the description below, the X direction is regarded as rightward, the Y direction is regarded as frontward, and the Z direction is regarded as upward. Note that the electricity storage pack 10 is attachable to a vehicle in any orientation.

### Electricity storage pack 10

As shown in FIG. 1, the electricity storage pack 10 includes a base member 11 made of an insulating synthetic resin, and a cover 12 for covering the base member 11. The base member 11 has an approximately rectangular plate shape. The four corners of the base member 11 are depressed and have a recessed shape. The cover 12 is made of a synthetic resin or metal, and has an upper wall having approximately the same shape as the base member 11, and a side wall that extends downward from the side edge of the upper wall.

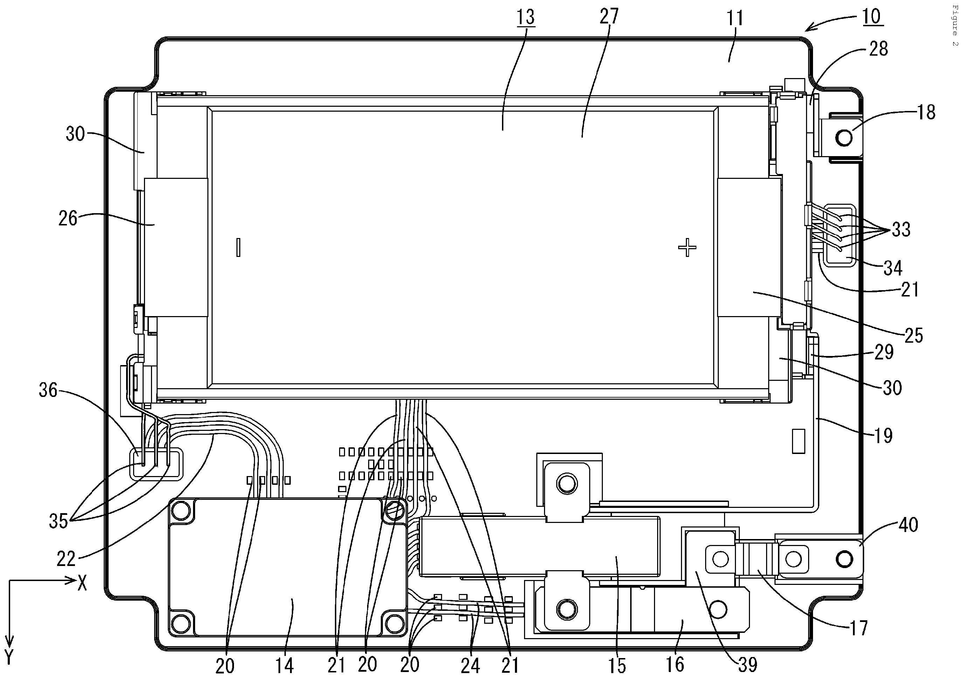

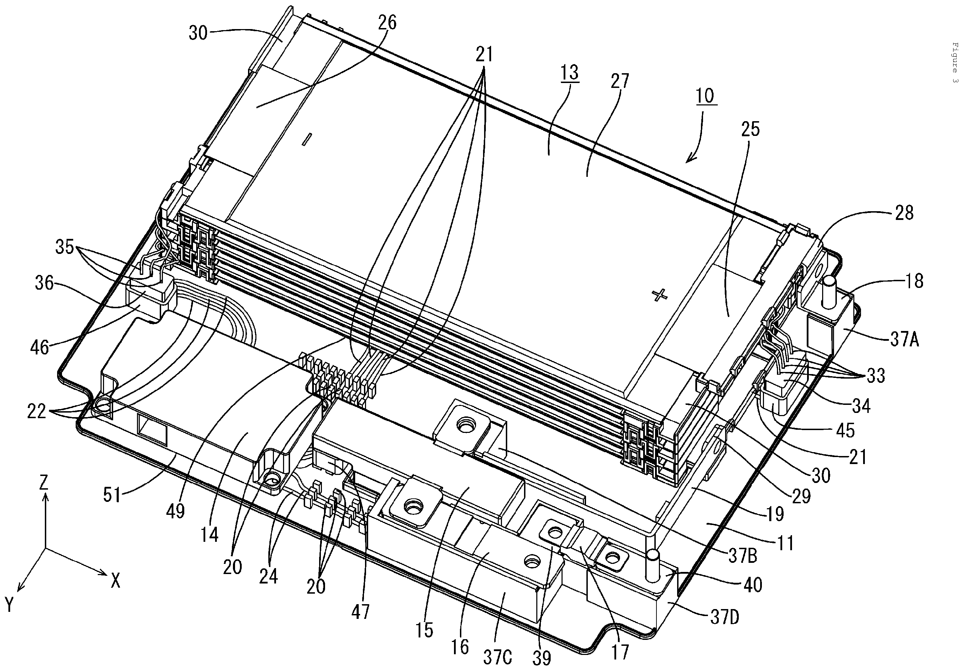

As shown in FIGS. 2 and 3, an electricity storage module 13, an electronic control unit 14, a relay unit 15, an electric current detection member 16, a fuse 17, a first output bus bar 18, a second output bus bar 19, and the like are arranged on the upper side of the base member 11. Also, the upper side of the base member 11 is provided with a plurality of holding portions 20 protruding upward. First voltage signal wires 21, second voltage signal wires 22, relay control signal wires 23, and output voltage signal wires 24 are routed on the upper side of the base member 11, each wire being sandwiched between a pair of adjacent holding portions 20.

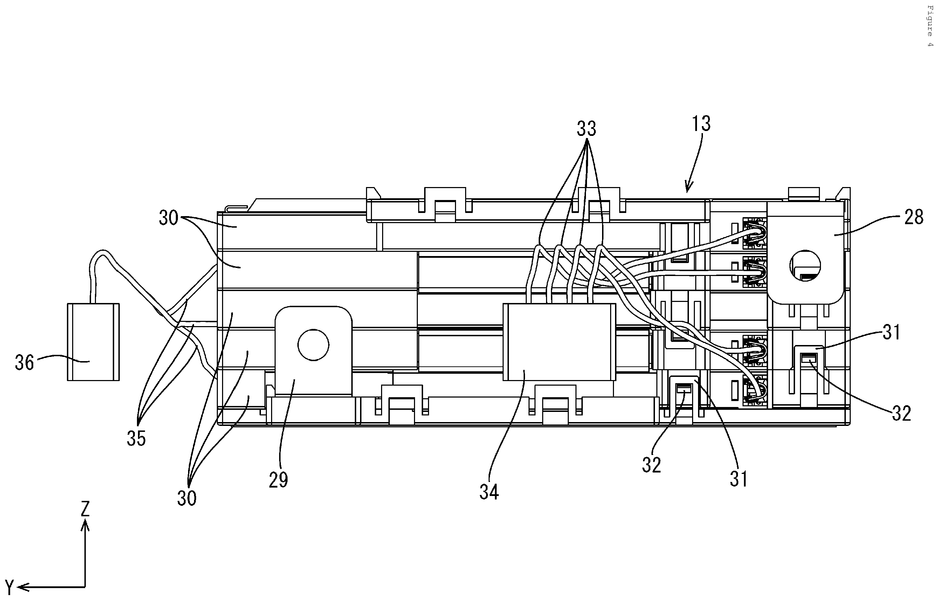

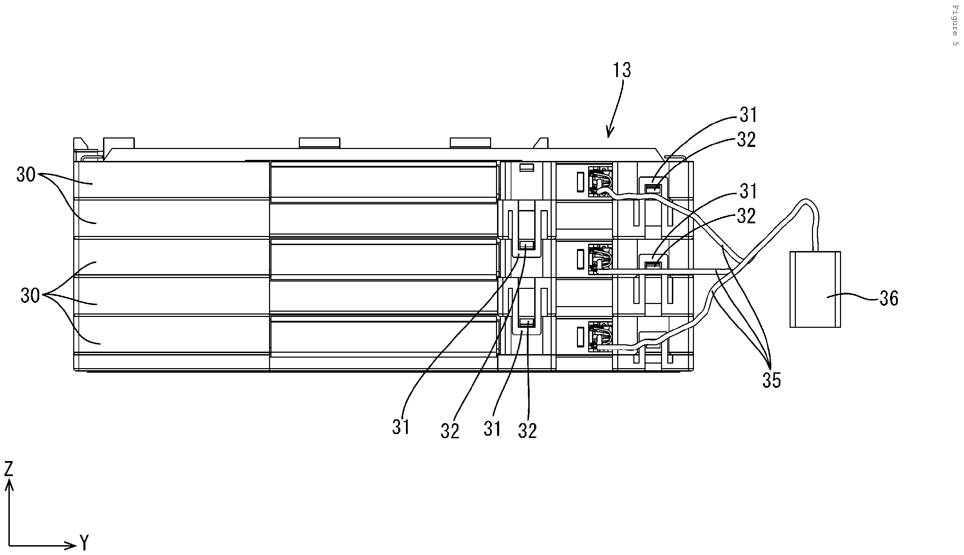

As shown in FIGS. 4 and 5, the electricity storage module 13 is constructed by stacking a plurality (five in the present embodiment) of power storage elements 27 each having a cathode 25 and an anode 26. The power storage elements 27 each have a power storage member (not shown) held between a pair of laminate sheets. The power storage elements 27 each have an approximately rectangular shape when viewed from above. The power storage elements 27 each have a pair of shorter sides, and the cathode 25 and the anode 26 are drawn from those shorter sides.

The vertically stacked power storage elements 27 are connected in series. The right end of the electricity storage module 13 is provided with a cathode output terminal 28 and an anode output terminal 29. The cathode output terminal 28 serves as the cathode of the electricity storage module 13, and the anode output terminal 29 serves as the anode of the electricity storage module 13.

The cathode 25 and the anode 26 of each power storage element 27 are arranged on a separator 30 made of a synthetic resin. The vertically stacked separators 30 are attached to one another in a stacked state by elastically locking locking portions 31 and locked portions 32 that are formed in the separators 30.

A plurality (four in the present embodiment) of first voltage detection wires 33 that are connected to the cathodes 25 or the anodes 26 of the power storage elements 27 and detect voltages of the power storage elements 27 are drawn from the right end of the electricity storage module 13. The plurality of first voltage detection wires 33 are guided into a first detection wire connector 34. The first voltage detection wires 33 are obtained by coating the outer circumference of twisted wires obtained by twisting a plurality of thin metal wires, with an insulating synthetic resin.

Also, a plurality (three in the present embodiment) of second voltage detection wires 35 that are connected to the cathodes 25 or the anodes 26 of the power storage elements 27 and detect voltages of the power storage elements 27 are drawn from the left end of the electricity storage module 13. The plurality of second voltage detection wires 35 are guided into a second detection wire connector 36. The second voltage detection wires 35 are obtained by coating the outer circumference of twisted wires obtained by twisting a plurality of thin metal wires, with an insulating synthetic resin.

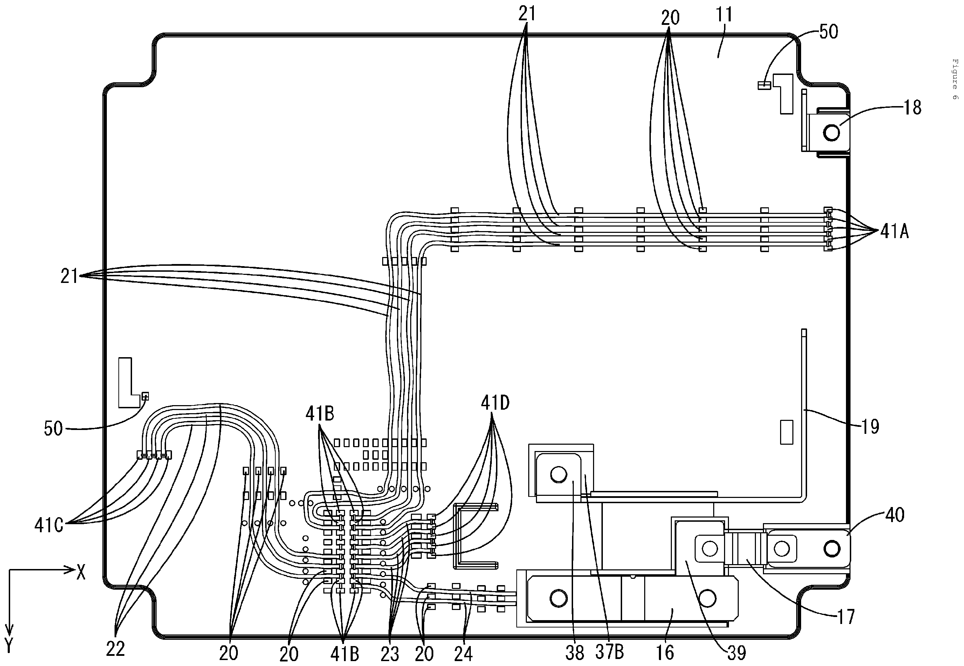

As shown in FIG. 6, the upper side of the base member 11 is provided with two locking claws 50 that can undergo elastic deformation and protrude upward. The base member 11 and the electricity storage module 13 are assembled by engaging the locking claws 50 with locking reception portions (not shown) formed in the separators 30.

As shown in FIGS. 2 and 3, the first output bus bar 18 is connected to the cathode output terminal 28 of the electricity storage module 13. The first output bus bar 18 is attached onto a base 37A protruding upward from the upper side of the base member 11. The first output bus bar 18 is obtained by punching a metal plate material into a predetermined shape. Any metal such as copper, a copper alloy, aluminum, or an aluminum alloy can be selected as the metal as needed. In the present embodiment, copper or a copper alloy is used. The surface of the first output bus bar 18 may be provided with a plating layer. Any metal such as tin or nickel can be selected as the metal constituting the plating layer as needed. In the present embodiment, the plating layer is made of tin.

The second output bus bar 19 is connected to the anode output terminal 29 of the electricity storage module 13. The second output bus bar 19 is obtained by punching a metal plate material into a predetermined shape. Any metal such as copper, a copper alloy, aluminum, or an aluminum alloy can be selected as the metal as needed. In the present embodiment, copper or a copper alloy is used. The surface of the second output bus bar 19 may be provided with a plating layer. Any metal such as tin or nickel can be selected as the metal constituting the plating layer as needed. In the present embodiment, the plating layer is made of tin.

The second output bus bar 19 is approximately L-shaped when viewed from above. A left end of the second output bus bar 19 is bent at an approximately right angle, serving as a terminal portion 38. A plate surface of the terminal portion 38 is oriented orthogonally to the vertical direction. The terminal portion 38 is attached onto a base 37B protruding upward from the upper side of the base member 11.

An electric current detection member 16 is disposed on the base member 11 to the front of the second output bus bar 19 at a position spaced apart from the second output bus bar 19. In the present embodiment, a shunt resistor for detecting an electric current is used in the electric current detection member 16, and the electric current detection member 16 is connected in series between the anode output terminal 29 of the electricity storage module 13 and a third output bus bar 40. The electric current detection member 16 is attached onto a base 37C protruding upward from the upper side of the base member 11. The electric current detection member 16 has a shape that is narrow and elongated in the horizontal direction. A voltage output from the anode output terminal 29 for the power storage elements 27 is detected based on the signal of this electric current detection member 16.

A relay bus bar 39 extending in the front-rear direction is connected to the right end of the electric current detection member 16. The relay bus bar 39 extends in the front-rear direction. The relay bus bar 39 is obtained by punching a metal plate material into a predetermined shape. Any metal such as copper, a copper alloy, aluminum, or an aluminum alloy can be selected as the metal as needed. In the present embodiment, copper or a copper alloy is used. The surface of the relay bus bar 39 may be provided with a plating layer. Any metal such as tin or nickel can be selected as the metal constituting the plating layer as needed. In the present embodiment, the plating layer is made of tin.

A fuse 17 is connected to a rear end of the relay bus bar 39. The fuse 17 extends in the horizontal direction. A third output bus bar 40 is connected to the right end of the fuse 17. The third output bus bar 40 is electrically connected to an external load (not shown).

The relay unit 15 is connected between the terminal portion 38 of the second output bus bar 19 and the left end of the electric current detection member 16. The relay unit 15 includes a relay (not shown). The second output bus bar 19 and the electric current detection member 16 are conductively connected or disconnected from each other by the relay of the relay unit 15.

The electronic control unit 14 is attached to the upper side of the base member 11. The electronic control unit 14 receives signals regarding voltages of the power storage elements 27 of the electricity storage module 13, and calculates the voltages of the power storage elements 27. Also, the electronic control unit 14 switches the relay of the relay unit 15 between conduction and disconnection. Also, the electronic control unit 14 calculates the voltage output from the anode output terminal 29 for the power storage elements 27 based on the signals of the electric current detection member 16.

### Routing structure

As shown in FIG. 6, a plurality (four in the present embodiment) of first voltage signal wires 21 are routed on the upper side of the base member 11. The first voltage signal wires 21 are obtained by coating the outer circumference of a single-core wire made of metal, with an insulating synthetic resin.

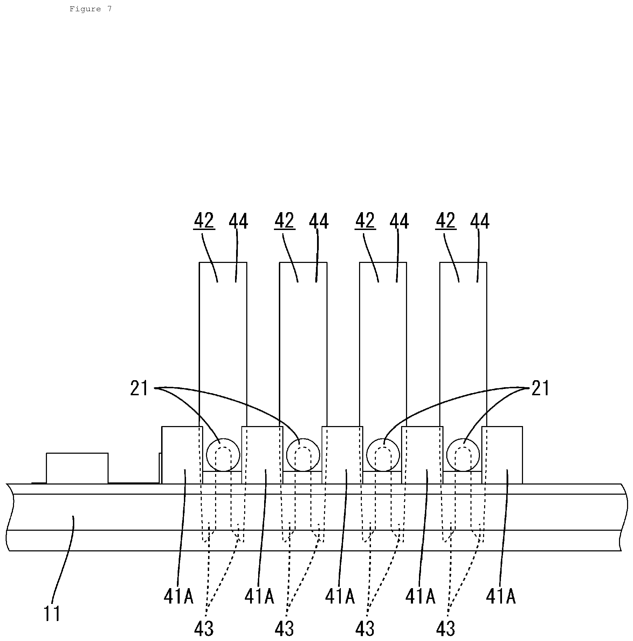

As shown in FIG. 7, one end of each of the first voltage signal wires 21 is sandwiched between solderless terminal holding portions 41A at a position near a right rear end of the base member 11. The solderless terminal holding portions 41A each have a columnar shape protruding upward from the upper side of the base member 11. Solderless terminals 42 made of metal are sandwiched between the solderless terminal holding portions 41A. A lower end of each solderless terminal 42 is provided with a pair of press-contact blades 43, and an upper end of the solderless terminal 42 serves as a male tab 44 having a plate shape.

The first voltage signal wire 21 is sandwiched between the pair of press-contact blades 43. Accordingly, the single-core wire of the first voltage signal wire 21 is sandwiched between the pair of press-contact blades 43, and thus the solderless terminals 42 and the first voltage signal wires 21 are electrically connected to each other.

The first voltage signal wires 21 extend leftward from the solderless terminal holding portions 41A, are bent frontward at positions slightly to the left of the center in the horizontal direction of the base member 11, and extend frontward. The first voltage signal wires 21 are routed at predetermined positions on the upper side of the base member 11 by being sandwiched between a plurality of holding portions 20.

The holding portions 20 each has a columnar shape protruding upward from the upper side of the base member 11. The first voltage signal wires 21 are routed along the upper side of the base member 11 by being sandwiched between the holding portions 20.

The other end of the first voltage signal wire 21 is sandwiched between solderless terminal holding portions 41B at a position that is located near the front end of the base member 11 and slightly to the left of the center in the horizontal direction of the base member 11. A solderless terminal 42 is sandwiched between the solderless terminal holding portions 41B. The configuration of the solderless terminals 42, and the structure of connection between the solderless terminals 42 and the first voltage signal wires 21 are similar to the configuration at the above-described one end of the first voltage signal wires 21, and thus the same members are given the same reference numerals, and their redundant description will be omitted.

A plurality (three in the present embodiment) of second voltage signal wires 22 are routed on the upper side of the base member 11. The second voltage signal wires 22 are obtained by coating the outer circumference of a single-core wire made of metal, with an insulating synthetic resin.

One end of each of the second voltage signal wires 22 is sandwiched between solderless terminal holding portions 41C at a position to the left end of the base member 11. The solderless terminal 42 held by the solderless terminal holding portions 41C is electrically connected to the other end of the second voltage signal wire 22.

The second voltage signal wire 22 extends rearward from the solderless terminal holding portion 41C, is bent at an approximately right angle, bends frontward at an approximately right angle, extends frontward, and is bent rightward at an approximately right angle at the front end.

The other end of the second voltage signal wire 22 is sandwiched between solderless terminal holding portions 41B at a position that is located near the front end of the base member 11 and slightly to the left of the center in the horizontal direction of the base member 11. The solderless terminal 42 held by the solderless terminal holding portions 41B is electrically connected to the other end of the second voltage signal wire 22.

A plurality (two in the present embodiment) of output voltage signal wires 24 are routed on the upper side of the base member 11. The output voltage signal wires 24 are obtained by coating the outer circumference of a single-core wire made of metal, with an insulating synthetic resin.

The one end of the output voltage signal wire 24 is electrically connected to the electric current detection member 16. The output voltage signal wires 24 are drawn from the electric current detection member 16 and extend leftward. The other end of the output voltage signal wire 24 is sandwiched between the solderless terminal holding portions 41B at a position that is located near the front end of the base member 11 and slightly to the left of the center in the horizontal direction of the base member 11. The solderless terminal 42 held by the solderless terminal holding portions 41B is electrically connected to the other end of the output voltage signal wire 24.

A plurality (four in the present embodiment) of relay control signal wires 23 are routed on the upper side of the base member 11. The relay control signal wires 23 are obtained by coating the outer circumference of a single-core wire made of metal, with an insulating synthetic resin.

One end of each of the relay control signal wires 23 is sandwiched between the solderless terminal holding portions 41B at a position that is located near the front end of the base member 11 and slightly to the left of the center in the horizontal direction of the base member 11. The solderless terminal 42 held by the solderless terminal holding portions 41B is electrically connected to the one end of the relay control signal wire 23.

The relay control signal wires 23 extend to the right from the solderless terminal holding portion 41B. The other end of the relay control signal wires 23 is sandwiched between solderless terminal holding portions 41D at a position that is located near the front end of the base member 11 and near the center in the horizontal direction of the base member 11. The solderless terminal 42 held by the solderless terminal holding portions 41D is electrically connected to the other end of the relay control signal wires 23.

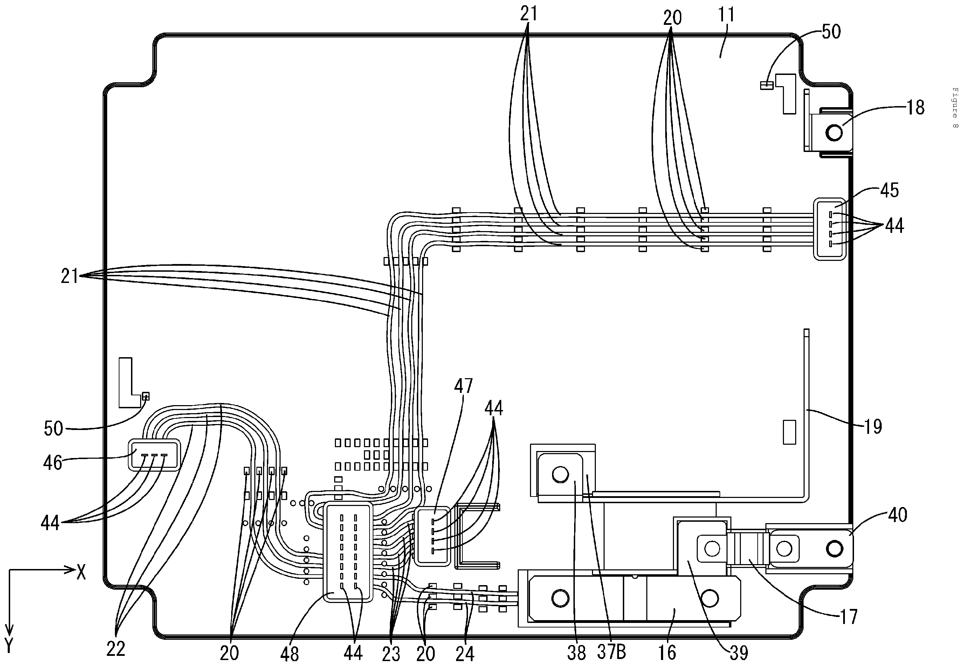

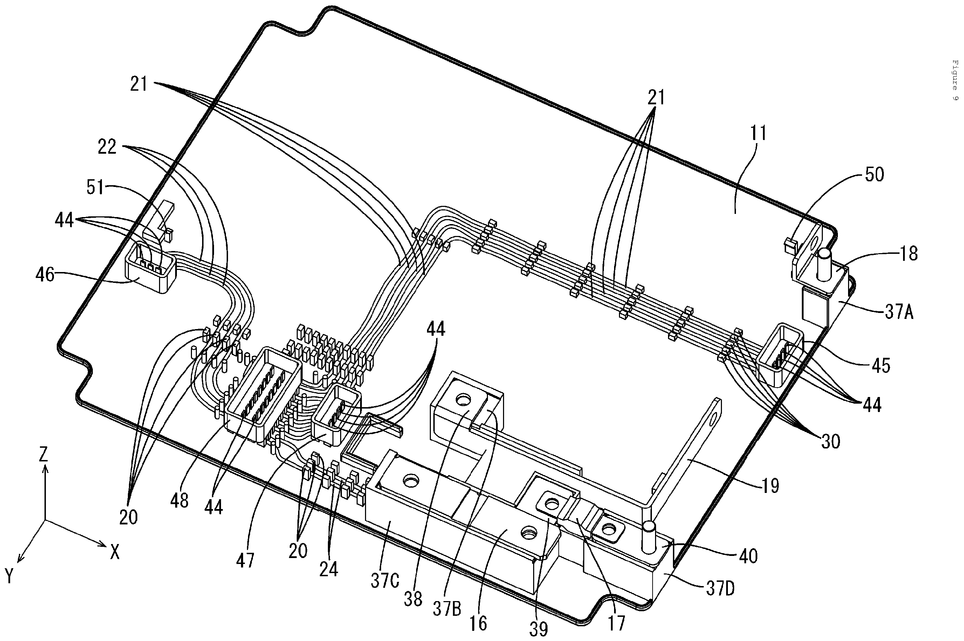

As shown in FIGS. 8 and 9, a first signal wire connector 45 that is made of a synthetic resin and has a hood shape that is upwardly open is disposed above the solderless terminal holding portions 41A that hold the one end of the first voltage signal wires 21. Male tabs 44 of the solderless terminals 42 protrude upward from a bottom wall of the first signal wire connector 45. The first signal wire connector 45 is fitted to the first detection wire connector 34. Accordingly, the first voltage detection wires 33 and the first voltage signal wires 21 are electrically connected to each other.

A second signal wire connector 46 that is made of a synthetic resin and has a hood shape that is upwardly open is disposed above the solderless terminal holding portions 41C that hold the one end of the second voltage signal wires 22. Male tabs 44 of the solderless terminals 42 protrude upward from a bottom wall of the second signal wire connector 46. The second signal wire connector 46 is fitted to the second detection wire connector 36. Accordingly, the second voltage detection wires 35 and the second voltage signal wires 22 are electrically connected to each other.

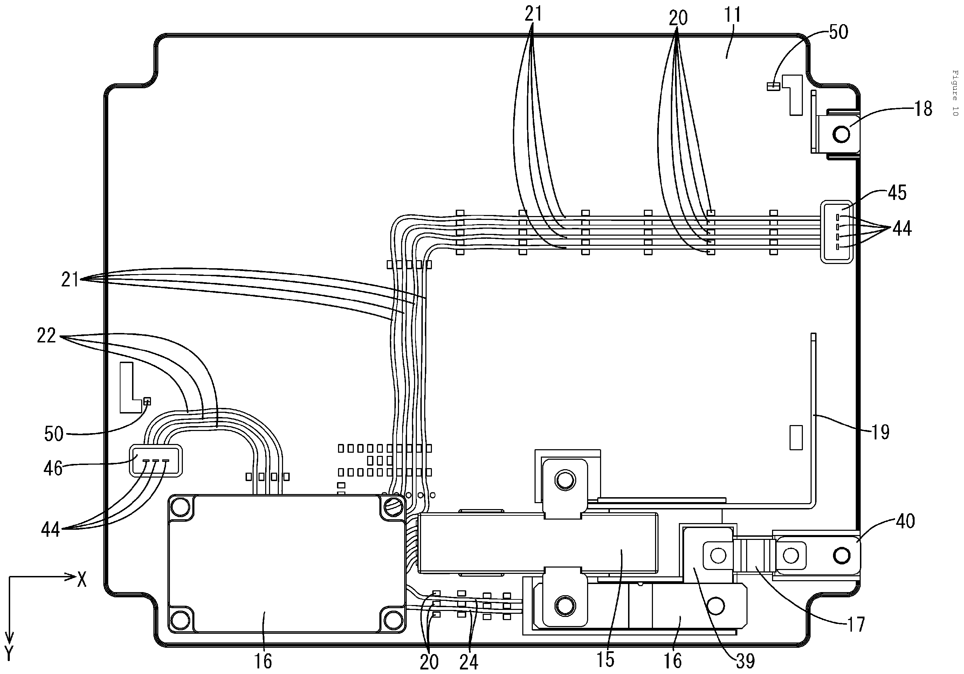

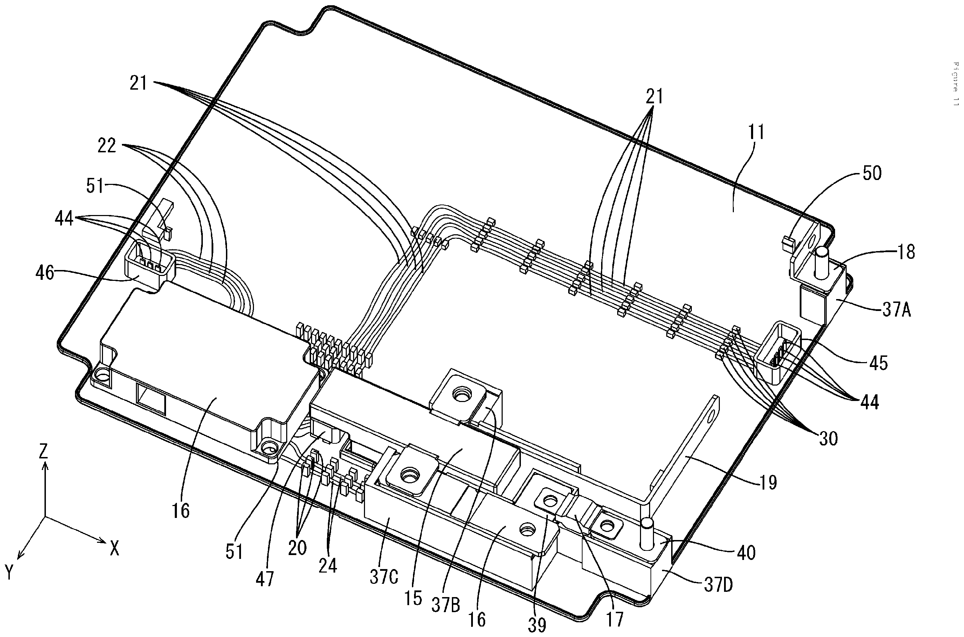

A relay control signal wire connector 47 that is made of a synthetic resin and has a hood shape that is upwardly open is disposed above the solderless terminal holding portions 41D that hold the other end of the relay control signal wires 23. Male tabs 44 of the solderless terminal 42 protrude upward from a bottom wall of the relay control signal wire connector 47. The relay control signal wire connector 47 is electrically connected to the relay unit 15 by being fitted to a connector (not shown) provided in the relay unit 15 (see FIGS. 10 and 11).

A third signal wire connector 48 having a hood shape that is upwardly open is disposed above the solderless terminal holding portions 41B that hold the other end of the first voltage signal wires 21, the other end of the second voltage signal wires 22, the other end of the output voltage signal wires 24, and the one end of the relay control signal wires 23. Male tabs 44 of the solderless terminals 42 protrude upward from a bottom wall of the third signal wire connector 48. The third signal wire connector 48 is electrically connected to the electronic control unit 14 by being fitted to a connector (not shown) provided in the electronic control unit 14 (see FIGS. 10 and 11).

A space 49 is formed between the electricity storage module 13 and the upper side of the base member 11, the space 49 extending over the height by which the holding portions 20 located below the electricity storage module 13 protrude upward from the upper side of the base member 11. As shown in FIGS. 1 and 3, the first voltage signal wires 21 are routed in this space 49. Specifically, at least some of the first voltage signal wires 21 are held by those holding portions 20 of the base member 11 that are formed in a region located below the electricity storage module 13, and thereby are routed in the space 49 below the electricity storage module 13.

Also, the first voltage signal wires 21 are routed inside a space 51 located between the base member 11 and the electronic control unit 14, and are connected to the electronic control unit 14.

### Example of process for manufacturing electricity storage pack 10 according to the present embodiment

Next, an example of a process for manufacturing the electricity storage pack 10 according to the present embodiment will be described. Note that the process for manufacturing the electricity storage pack 10 is not limited to the description below.

As shown in FIG. 6, the base member 11 is formed into a predetermined shape using an insulating synthetic resin. The first output bus bar 18, the first output bus bar 18, the second output bus bar 19, a voltage sensor, the relay bus bar 39, the fuse 17, and the third output bus bar 40 are attached to the base member 11.

The first voltage signal wires 21, the second voltage signal wires 22, the output voltage signal wires 24, and the relay control signal wires 23 are routed with the holding portions 20 of the base member 11. This step can be automated with a machine. The solderless terminals 42 are attached to the solderless terminal holding portions 41A, 41B, 41C, and 41D.

As shown in FIGS. 8 and 9, the first signal wire connector 45, the second signal wire connector 46, the third signal wire connector 48, and the relay control signal wire connector 47 are routed above the solderless terminal holding portions 41A, 41B, 41C, and 41D.

As shown in FIGS. 10 and 11, the connector of the relay unit 15 is fitted to the relay control signal wire connector 47. Also, the connector of the electronic control unit 14 is fitted to the third signal wire connector 48.

As shown in FIGS. 2 and 3, the electricity storage module 13 is attached to the upper side of the base member 11 from above the first voltage signal wires 21. The first detection wire connector 34 of the electricity storage module 13 is fitted to the first signal wire connector 45. Also, the second detection wire connector 36 of the electricity storage module 13 is fitted to the second signal wire connector 46.

Lastly, as shown in FIG. 1, the electricity storage pack 10 is completed by attaching the cover 12 to the upper side of the base member 11 from the above.

### Effects of present embodiment

Next, the effects of the present embodiment will be described. An electricity storage pack 10 according to the present embodiment includes an electricity storage module 13, first voltage signal wires 21 through which signals regarding the state of the electricity storage module 13 are transmitted, and a base member 11 on which the electricity storage module 13 is placed and has holding portions 20 for holding first voltage signal wires 21, and the first voltage signal wires 21 are routed in a space 49 located between the electricity storage module 13 and the base member 11. Accordingly, since the first voltage signal wires 21 can be routed by effectively utilizing the space 49 located between the electricity storage module 13 and the base member 11, the size of the electricity storage pack 10 can be reduced.

Also, according to the present embodiment, the first voltage signal wires 21 each include a single-core wire, the base member 11 has solderless terminal holding portions 41A for holding solderless terminals 42, one end of each of the solderless terminals 42 has press-contact blades 43 and the other end has a male tab 44, the press-contact blades 43 contact the first voltage signal wires 21, and the male tabs 44 are introduced into a first signal wire connector 45. Accordingly, the first voltage signal wires 21 and the solderless terminal 42 can be electrically connected to each other with a simple method for contacting the first voltage signal wires 21 and the solderless terminals 42 by pressure. Because the male tabs 44 of these solderless terminals 42 are introduced into the first signal wire connector 45, the first voltage signal wires 21 can be easily electrically connected to the other electronic device by fitting a counterpart connector to the first signal wire connector 45.

Also, according to the present embodiment, first voltage detection wires 33 for detecting the voltage of the electricity storage module 13 are drawn from the electricity storage module 13, the ends of the first voltage detection wires 33 are connected to first detection wire connector 34, and the first voltage detection wires 33 and the first voltage signal wires 21 are electrically connected to each other by the first detection wire connector 34 and the first signal wire connector 45 being fitted to each other. According to the present embodiment, the first voltage detection wires 33 and the first voltage signal wires 21 can be constituted by different electric wires. Moreover, a known method such as crimping can be used when the first voltage detection wires 33 are connected to the electrodes of the electricity storage module 13, and thus the first voltage detection wires 33 preferably include twisted wires. On the other hand, the first voltage signal wires 21 and the solderless terminal can be connected to each other by contacting by pressure when the first voltage signal wires 21 are routed on the upper side of the base member 11, and thus the first voltage signal wires 21 preferably include single-core wires. According to the present embodiment, a twisted wire can be used as the first voltage detection wire 33, and a single-core wire can be used as the first voltage signal wire 21.

Also, according to the present embodiment, the electricity storage module 13 includes the plurality of power storage elements 27 each having a cathode 25 and an anode 26, and the first voltage detection wires 33 are electrically connected to at least one of the cathode 25 and the anode 26. Accordingly, it is possible to detect the voltages of the power storage elements 27 in the electricity storage module 13.

Also, according to the present embodiment, an electronic control unit 14 is placed on the base member 11, the first voltage signal wires 21 are routed in a space 51 located between the base member 11 and the electronic control unit 14 and connected to the electronic control unit 14. This makes it possible to increase space efficiency when the first voltage signal wires 21 and the electronic control unit 14 are connected.

### Other Embodiments

The present invention is not merely limited to the embodiment described above using the foregoing description and drawings, and embodiments such as the following are also encompassed in the technical scope of the present invention.

(1) Although the present embodiment has a configuration in which the first voltage signal wires 21 are routed in the space 49 located between the electricity storage module 13 and the base member 11, there is no limitation to this, and for example, a configuration may also be adopted in which the second voltage signal wires 22 are routed in a space located between the electricity storage module 13 and the base member 11, or a configuration may also be adopted in which a temperature detection wire for detecting the temperature of the electricity storage module 13 is routed in the space 49 located between the electricity storage module 13 and the base member 11.

(2) Although the holding portion 20 has a columnar shape protruding from the upper side of the base member 11 in the present embodiment, there is no limitation to this, and the holding portion may also have a rib-shape protruding from the upper side of the base member 11. Also, the holding portion 20 may also have a groove-shape obtained by depressing the upper side of the base member 11. In this manner, any structure that can hold a signal wire on the upper side of the base member 11 can be applied to the holding portion as appropriate.

(3) Although the present embodiment has a configuration in which the first voltage signal wires 21 and the first voltage detection wires 33 are connected via the first signal wire connector 45 and the first detection wire connector 34, there is no limitation to this, and a configuration may also be adopted in which the first voltage signal wires 21 are introduced into the electricity storage module 13 and the voltages of the power storage elements 27 are detected directly. In this case, the first voltage signal wires 21 may include twisted wires or single-core wires.

### Reference Signs List

10 : Electricity storage pack
11 : Base member
13 : Electricity storage module
14 : Electronic control unit
20 : Holding portion
21 : First voltage signal wire
25 : Cathode
26 : Anode
27 : Power storage element
33 : First voltage detection wire
34 : First detection wire connector
41A, 41B, 41C, 41D: Solderless terminal holding portion
42 : Solderless terminal
43 : Press-contact blade
44 : Male tab
45 : First detection wire connector

## Claims

1. An electricity storage pack comprising:
an electricity storage module;
a signal wire through which a signal regarding a state of the electricity storage module is transmitted; and
a base member on which the electricity storage module is placed and that has a holding portion for holding the signal wire,
wherein the signal wire is routed in a space located between the electricity storage module and the base member.

2. The electricity storage pack according to claim 1,
wherein the signal wire includes a single-core wire,
the base member has a solderless terminal holding portion for holding a solderless terminal,
one end of the solderless terminal has a press-contact blade and another end of the solderless terminal has a male tab, and
the press-contact blade contacts the signal wire, and the male tab is introduced into a signal wire connector.

3. The electricity storage pack according to claim 2,
wherein a detection wire for detecting the state of the electricity storage module is drawn from the electricity storage module,
an end of the detection wire is connected to a detection wire connector, and
the detection wire and the signal wire are electrically connected to each other by the detection wire connector and the signal wire connector being fitted to each other.

4. The electricity storage pack according to claim 3,
wherein the electricity storage module includes a plurality of power storage elements each having a cathode and an anode, and
the detection wire is a voltage detection wire that is electrically connected to at least one of the cathode and the anode.

5. The electricity storage pack according to any one of claims 1 to 4,
wherein an electronic control unit is placed on the base member, and
the signal wire is routed in a space located between the base member and the electronic control unit and is connected to the electronic control unit.
